# EUROPÄISCHE PATENTANMELDUNG

(11) **EP 1 022 200 A2**
(43) Veröffentlichungstag der Anmeldung: **26.07.2000**
(21) Anmeldenummer: 00101164.2
(22) Anmeldetag: 21.01.2000
(51) Int. Cl.: B60R 22/195

(54) **Seilumlenkung für einen pyrotechnischen Gurtstraffer**

(30) Priorität: 25.01.1999 DE 29901196 U
(71) Anmelder: Dittrich, Klaus-Jürgen, 28832 Achim (DE)
(72) Erfinder: Dittrich, Klaus-Jürgen, 28832 Achim (DE)

(57) **Zusammenfassung**

Seilumlenkung (1) für einen pyrotechnischen Gurtstraffer, mit einer Halterung (4) zur Befestigung einer pyrotechnischen Zylinder/Kolbenanordnung (20), mit zwei beabstandeten Seilkanälen (6) zur Umlenkung zweier Zugseilstränge (22) von der Zylinder/Kolbenanordnung zu einem Gurtschloß (30) oder dergl., und mit Befestigungsmitteln (8,40) zum Befestigen der Seilumlenkung an der Karosserie eines Fahrzeuges, dadurch gekennzeichnet, daß die Befestigungsmittel symmetrisch zwischen oder neben den Seilkanälen (6) derart angeordnet sind, daß sich die von den beiden Zugseilsträngen (22) auf die Befestigungsmittel (8,40) oder die Seilumlenkung ausgeübten Lastmomente im wesentlichen aufheben.

## Beschreibung

Die Erfindung betrifft eine Seilumlenkung für einen pyrotechnischen Gurtstraffer, wenn eine Halterung zur Befestigung einer pyrotechnischen Zylinder/Kolbenanordnung, mit zwei beabstandeten Seilkanälen zur Umlenkung zweier Zugseilstränge von der Zylinder/Kolbenanordnung zu einem Gurtschloß, und mit Befestigungsmitteln zum Befestigen der Seilumlenkung an der Karosserie eines Fahrzeuges.

Aus der EP 0 685 371 ist ein pyrotechnischer Gurtstraffer bekannt, der eine Seilumlenkung der eingangs genannten Art besitzt, bei der die beiden Seilkanäle in vorgegebenem Abstand von einem zentralen Befestigungsmittel einen vorgegebenen Bogenwinkel herum angeordnet, so daß die Zugseilstränge von dem Kolben kommend einen entsprechenden Bogenwinkel um das zentrale Befestigungsmittel herum umgelenkt werden und dann zu einem Gurtschloß verlaufen. Da beim Auslösen eines pyrotechnischen Gurtstraffers der Kolben unter der Wirkung eines explodierenden Treibmittels im Zylinder schlagartig in die Straffposition geschossen wird, sind beim Auslösen des Gurtstraffers die Zugseilstränge mit erheblichen Zugkräften belastet, die bei der bekannten Seilumlenkung in entsprechende zentripetal gegen das Befestigungsmittel wirkende Kräfte umgesetzt werden. Diese Zentralkräfte stellen gegenüber dem einseitig an der Karosserie eines Fahrzeuges befestigten Befestigungsmittel erhebliche Lastmomente dar, welche die Befestigung der Seilumlenkung erheblich beanspruchen.

Aufgabe der Erfindung ist es hier, eine Seilumlenkung der eingangs genannten Art derart weiterzubilden, daß eine sichere und zuverlässige Befestigung der Seilumlenkung gewährleistet ist.

Diese Aufgabe wird bei der Seilumlenkung der eingangs genannten Art erfindungsgemäß dadurch gelöst, daß die Befestigungsmittel symmetrisch zwischen den Seilkanälen derart angeordnet sind, daß sich die von den beiden Zugseilsträngen auf die Befestigungsmittel ausgeübten Lastmomente im wesentlichen aufheben.

Die Vorteile der Erfindung liegen insbesondere darin, daß die Befestigungsmittel der Seilumlenkung symmetrisch zwischen bzw. symmetrisch neben den beiden Seilkanälen so angeordnet sind, daß sich die - bei einem Straffungsvorgang - in den Zugseilsträngen auftretenden Zugkräfte einander entgegengesetzte Lastmomente auf die Befestigungsmittel ausüben, so daß sich die Lastmomente im wesentlichen aufheben, daß also die Befestigungsmittel dann nur auf Zugkräfte beansprucht sind. Die Gefahr, daß die Befestigungsmittel bei dem Auslösen des pyrotechnischen Gurtstraffer brechen oder verbiegen, oder die Gefahr, daß Teile der Seilumlenkung unter entsprechenden Lastmomenten abbrechen, wird dadurch vermieden.

Gemäß einer bevorzugten Ausführungsform der Erfindung enthalten die Befestigungsmittel mindestens eine Bohrung, durch die eine Schraube oder ein Gewindezapfen hindurchgeführt wird und dann in der Karosserie des Fahrzeugs verschraubt wird. Alternativ enthalten die Befestigungsmittel einen Gewindebolzen, der an der Seilumlenkung sitzt und in ein Gewinde der Kfz-Karosserie einschraubbar ist. Die Achse des Befestigungsmittels, d.h. der Bohrung bzw. des Gewindebolzens spannt erfindungsgemäß mit der Längsachse der Zylinder/Kolbenanordnung eine Symmetrieebene auf, zu der die Seilkanäle spiegelbildlich verlaufen, so daß die aus den Zugseil-Kräften und dem Abstand zu der Symmetrieebene resultierenden Lastmomenten gleichgroß, jedoch gegensinnig gerichtet sind und sich dadurch in ihrer Wirkung auf die Befestigungsmittel aufheben.

Bevorzugt ist die Seilumlenkung als massiver Materialblock ausgebildet, und die Halterung für die Zylinder/Kolbenanordnung befindet sich an einer Stirnseite dieses Blockes. Die Längsachse der Zylinder/Kolbenanordnung schließt bevorzugt mit der Achse der Bohrung bzw. des Gewindebolzens einen spitzen Winkel ein, ebenso verlassen die Zugseilstränge die Seilumlenkung unter einem spitzen Winkel zu der Bohrung bzw. dem Gewindebolzen, welcher der Befestigung der Seilumlenkung an der Karosserie dient. Die Längsachse der Bohrung bzw. des Gewindebolzens ist dann bevorzugt so ausgerichtet, daß sie im wesentlichen mit der Richtung der Kraftresultierenden zusammenfällt, die bei einem Straffungsvorgang aus den Zugkräften der Zugseilstränge resultiert. Bei dieser Ausführungsform der Erfindung ist sichergestellt, daß die Befestigungsmittel, vorzugsweise also ein durch eine Bohrung hindurchgeführte Gewindebolzen nur Aufzug beansprucht ist, daß also die Befestigung der Seilumlenkung eine besonders hohe Festigkeit aufweist.

Gemäß einer besonders bevorzugten Ausführungsform der Erfindung ist der Seilumlenkungsblock durch eine Grundfläche gekennzeichnet, die senkrecht zur Achse der Bohrung bzw. des Gewindebolzens verläuft und bei der Befestigung der Seilumlenkung auf der Karosserie des Kraftfahrzeuges aufliegt. Die Seilkanäle verlaufen in bzw. in geringem Abstand von den Seitenflächen des Seilumlenkungsblockes, der Seilumlenkungsblock besitzt bevorzugt eine ebene Deckfläche parallel zu einer ebenen Grundfläche. Besonders bevorzugt befindet sich die Halterung für die Zylinder/Kolbenanordnung stirnseitig zwischen den beiden Seitenwänden, und die Seilkanäle verlaufen von der Zylinder/Kolbenanordnung gekrümmt durch den Seilumlenkungsblock und treten an der Deckfläche oder an einer der Halterung gegenüberliegenden Stirnfläche aus dem Seilumlenkungsblock aus.

Gemäß einer weiteren bevorzugten Ausführungsform der Erfindung ist die Seilumlenkung für zwei pyrotechnische Gurtstraffer ausgebildet. Bei dieser Ausführungsform sind zwei pyrotechnische Zylinder/Kolbenanordnungen parallel zueinander an der Seilumlenkung befestigt. Pro Zylinderkolbenanordnung ist mindestens je ein Seilkanal, alternativ auch jeweils zwei Seilkanäle zur Umlenkung eines bzw. zweier Zugseilstränge vorgesehen. Die Befestigungsmittel zum Befestigen der Seilumlenkung an der Fahrzeugkarosserie sind erfindungsgemäß symmetrisch zwischen den Seilkanälen in einer Ebene angeordnet, in der sich die von den Zugseilsträngen herrührenden, auf die Befestigungsmittel ausgeübten Lastmomente im wesentlichen aufhebend ab. Vorteilhafte Weiterbildungen der Erfindung sind durch die Merkmale der Unteransprüche gekennzeichnet.

Im folgenden wird ein Ausführungsbeispiel der Erfindung anhand der Zeichnungen näher erläutert. Es zeigen:
- Figur 1: eine Seitenansicht einer Seilumlenkung mit Zylinder/Kolbenanordnung, zwei Zugseilsträngen und einem daran befestigten Gurtschloß;
- Figur 2: eine Aufsicht auf die Anordnung gemäß Figur 1; und
- Figur 3: eine perspektivische Ansicht der Anordnung gemäß Figur 1 und 2.

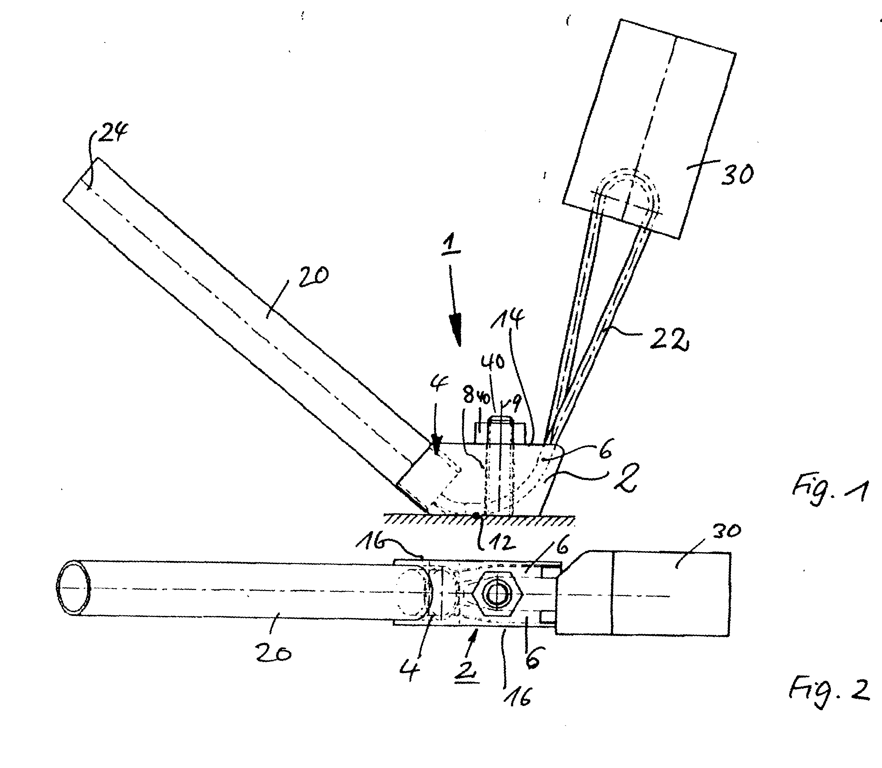

In den Figuren 1 bis 3 ist eine Seilumlenkung 1 dargestellt, die eine Halterung 4 zur Aufnahme einer pyrotechnischen Zylinder/Kolbenanordnung 20 besitzt. Durch die Seilumlenkung hindurch verlaufen beabstandet zwei Seilkanäle 6, welche zwei Zugseilstränge 22 von der Zylinder/Kolbenanordnung 20 beispielsweise zu einem Gurtschloß 30 umlenkt. Die Zugseilstränge 22 sind an dem Gurtschloß 30 befestigt. Die Seilumlenkung 1 ist mit Befestigungsmitteln 8, 40 versehen, die zur Befestigung der Seilumlenkung 1 an der Karosserie eines Fahrzeugs dienen.

Die Befestigungsmittel 8, 14 bestehen aus einer Bohrung 8, durch die ein Gewindebolzen 40 hindurchgeführt ist, der mit der Karosserie fest verbunden ist oder in einem Gewinde der Karosserie verschraubt werden kann, wobei die Seilumlenkung mittels einer Mutter 40 fest gegen die Karosserie gespannt werden kann.

Die Seilumlenkung 1 besitzt - in der dargestellten Ausführungsform - die Gestalt eines massiven Blockes, der zwei parallele Seitenflächen 16, eine untere Grundfläche 12 und eine obere Deckfläche 14 aufweist, die im wesentlichen parallel zur unteren Grundfläche 12 verläuft. Zwischen den beiden Seitenflächen 16 befindet sich stirnseitig die Halterung 4 zur Aufnahme der Zylinder/Kolbenanordnung, von der die beiden Seilkanäle 6 gekrümmt durch den Seilumlenkungsblock hindurch verlaufen und an der Deckenfläche 14 aus dem Block austreten.

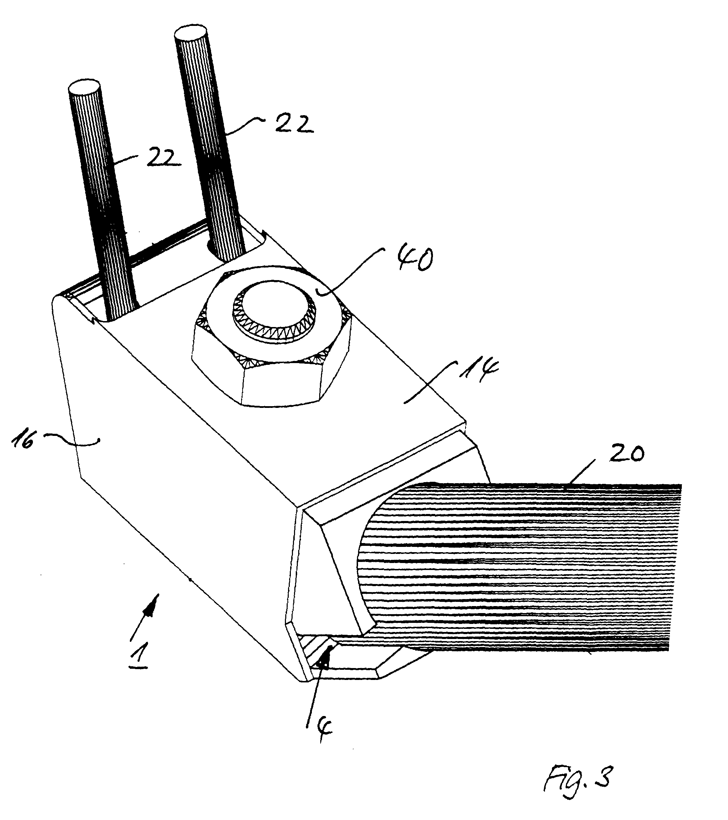

Wie insbesondere den Figuren 2 und 3 entnehmbar ist, sind die Befestigungsmittel, d.h. die Bohrung 8 und der Gewindebolzen 40 symmetrisch zwischen den Seilkanälen 6 in einer Ebene angeordnet, die von der Längsachse 24 der Zylinder/ Kolbenanordnung und der Achse 9 der Befestigungsmittel aufgespannt wird. Die beiden Seilkanäle 6 verlaufen spiegelbildlich zu dieser Symmetrieebene, so daß die von den beiden Zugseilsträngen 22 - bei einem Straffungsvorgang - auf die Befestigungsmittel 8, 40 ausgeübten Lastmomente im wesentlichen entgegengesetzt zueinander gerichtet sind und sich daher aufheben, da die Zugseilstränge von dem Befestigungsmitteln 8, 40 denselben Abstand aufweisen.

Die Halterung 4 für die Zylinder/Kolbenanordnung 20 ist so angeordnet, daß die Zylinder/Kolbenanordnung 20 einen spitzen Winkel zu der Achse 9 der Befestigungsmittel 8, 14 einschließt. In gleicher Weise fassen die Zugseilstränge 22 die Seilumlenkung ein unter einem spitzen Winkel zu der Achse 9 der Befestigungsmittel 8, 40. Die Achse 9 der Befestigungsmittel 8, 40 verläuft bei dieser Ausführungsform der Erfindung im wesentlichen in Richtung der kraftresultierenden, die sich aus den - bei einem Straffungsvorgang auftretenden - Zugkräften der Zugseilstränge ergibt. Diese Ausrichtung der Längsachse 9 der Befestigungsmittel 8, 40 hat zur Folge, daß die Befestigungsmittel 8, 40 im wesentlichen nur durch Zuglast beansprucht werden, daß also die Verbindung von Seilumlenkung und Karosserie besonders fest ist und nicht einem durch Lastmomente hervorgerufenen Materialbruch odre Materialverformung ausgesetzt ist.

## Patentansprüche

1. Seilumlenkung für einen pyrotechnischen Gurtstraffer, mit einer Halterung zur Befestigung einer pyrotechnischen Zylinder/Kolbenanordnung, mit zwei beabstandeten Seilkanälen zur Umlenkung zweier Zugseilstränge von der Zylinder/Kolbenanordnung zu einem Gurtschloß oder dergl., und mit Befestigungsmitteln zum Befestigen der Seilumlenkung an der Karosserie eines Fahrzeuges, dadurch gekennzeichnet, daß die Befestigungsmittel (8) symmetrisch zwischen oder neben den Seilkanälen (6) derart angeordnet sind, daß sich die von den beiden Zugseilsträngen (22) auf die Befestigungsmittel (8; 40) oder die Seilumlenkung ausgeübten Lastmomente im wesentlichen aufheben.

2. Seilumlenkung nach Anspruch 1,
dadurch gekennzeichnet, daß die Befestigungsmittel (8) mindestens eine Bohrung und/oder einen Gewindebolzen (40) enthalten, deren Längsachse(n) (9) mit der Längsachse der Zylinder/Kolbenanordnung eine Symmetrieebene zwischen den Seilkanälen (6) aufspannt.

3. Seilumlenkung nach Anspruch 2 oder 3,
dadurch gekennzeichnet, daß die Zugseilstränge zu der Zylinder/Kolbenanordnung und zu dem Gurtschloß je einen spitzen Winkel mit der Achse (9) der Bohrung (8) bzw. des Gewindebolzens (40) einschließen.

4. Seilumlenkung nach Anspruch 3,
dadurch gekennzeichnet, daß die Achse (9) der Bohrung (8) und/oder des Gewindebolzens (40) im wesentlichen in der Richtung der Kraftresultierenden zusammenfällt, die bei einem Straffungsorgan aus den Zugkräften der Zugseilstränge resultiert.

5. Seilumlenkung nach einem der vorstehenden Ansprüche,
gekennzeichnet durch eine Grundfläche (12) senkrecht zur Achse (9) der Bohrung (8) bzw. des Gewindebolzens (40).

6. Seilumlenkung nach einem der vorstehenden Ansprüche,
dadurch gekennzeichnet, daß die Seilkanäle (6) in den beiden Seitenflächen (16) bzw. nahe der beiden Seitenflächen (16) der Seilumlenkung verlaufen.

7. Seilumlenkung nach einem der vorstehenden Ansprüche,
gekennzeichnet durch eine ebene Deckfläche (14) parallel zu einer ebenen Grundfläche (12).

8. Seilumlenkung nach einem der vorstehenden Ansprüche,
dadurch gekennzeichnet, daß sich die Halterung (4) für die Zylinder/Kolbenanordnung stirnseitig zwischen den beiden Seitenwänden (16) befindet, und daß die Seilkanäle (6) von der Zylinder/Kolbenanordnung gekrümmt durch die Seilumlenkung hindurch verlaufen und an der Deckfläche (14) oder einer der Halterung gegenüber liegenden Stirnfläche aus der Seilumlenkung austreten.

9. Seilumlenkung für zwei pyrotechnische Gurtstraffer,
mit zwei Halterungen zur Befestigung je einer pyrotechnischen Zylinder/Kolbenanordnung, und mindestens je einem Seilkanal pro Zylinder/Kolbenanordnung zur Umlenkung eines Zugseilstranges von der Zylinder/Kolbenanordnung zu einem Gurtschloß, und mit Befestigungsmitteln zum Befestigen der Seilumlenkung an der Karosserie eines Fahrzeugs,
dadurch gekennzeichnet, daß die Befestigungsmittel symmetrisch zwischen und/oder symmetrisch neben den Seilkanälen derart angeordnet sind, daß sich die von den Zugseilsträngen auf die Befestigungsmittel ausgeübten Lastmomente im wesentlichen aufheben.

10. Seilumlenkung nach Anspruch 9,
dadurch gekennzeichnet, daß pro Zylinder/Kolbenanordnung je zwei Zugseilstränge und jeweils zwei entsprechende Seilkanäle vorgesehen sind, und daß die Befestigungsmittel symmetrisch zwischen den vier Seilkanälen derart angeordnet sind, daß sich die von den Zugseilsträngen auf die Befestigungsmitte ausgeübten Lastmomente im wesentlichen aufheben.

11. Pyrotechnischer Gurtstraffer mit einer pyrotechnischen Zylinder/Kolbenanordnung und mit einer Seilumlenkung mit Seilkanälen, durch welche Zugseilstränge hindurchgeführt werden, die einerseits am Kolben, andererseits am Gurtschloß befestigt sind,
dadurch gekennzeichnet, daß die Seilumlenkung gemäß einem oder mehreren der Ansprüche 1 bis 10 ausgebildet ist.
